# EUROPEAN PATENT SPECIFICATION

(11) **EP 1 507 453 B1**
(45) Date of publication and mention of the grant of the patent: **12.12.2007**
(21) Application number: 03733696.3
(22) Date of filing: 26.05.2003
(51) Int. Cl.: A01J 7/04

(54) **A DEVICE FOR CLEANING THE TEATS OF AN ANIMAL AND A MILKING STALL INCLUDING THE DEVICE**
VORRICHTUNG ZUR SÄUBERUNG DER ZITZEN EINES TIERES UND MELKSTAND MIT DER VORRICHTUNG
DISPOSITIF POUR NETTOYER LES MAMELLES D'UN ANIMAL ET STALLE DE TRAITE EQUIPEE DE CE DISPOSITIF

(30) Priority: 29.05.2002 SE 0201596
(43) Date of publication of application: 23.02.2005
(73) Proprietor: DeLaval Holding AB, 147 21 Tumba (SE)
(72) Inventor: JOHNSSON, Erik, S-269 95 Båstad (SE); ULLNERT, Peter, S-417 29 Göteborg (SE); PETTERSON, Torbjörn, S-646 32 Gnesta (SE)
(74) Representative: Kossmann, Jan Henrik
(86) International application number: PCT/SE2003/000853
(87) International publication number: WO 2003/098998

(56) References cited:
- EP-A1- 0 134 854
- EP-A1- 0 728 412
- EP-A2- 1 163 842
- WO-A1-01/17337
- WO-A1-99/03331
- DE-B- 1 152 569
- SE-C2- 516 770

## Description

### BACKGROUND OF THE INVENTION AND PRIOR ART

The present invention refers generally to the treatment of the teats of an animal in connection with a milking operation, especially a treatment including cleaning and/or massaging of the teats. The present invention refers to such treatments in all kind of milking stalls, such as herringbone milking parlours, rotary milking parlours, tandem parlours, milking parlours adapted for manual as well as automatic attachment of the teatcups, etc.

More specifically the present invention refers to a device for cleaning the teats of an animal according to the preamble of claim 1, see WO99/0333/.

The present invention also refers to a milking stall including such a device.

Such teat-cleaning devices are known for cleaning the teats of an animal to be milked before a milking operation and possibly after a milking operation. Such a cleaning before the milking operation has several purposes. A first purpose is to clean the teat in order to prevent dirt, microorganisms or other particles from reaching the milk to be delivered. A second purpose is to massage the teat in order to make the animal prepared for the milking operation so that the milk can be extracted from the teat in an easy manner. A third purpose is to extract the so-called fore-milk, which is the first small quantity of milk. This quantity of milk has a poor quality and is therefore not suitable to be delivered from the farm.

WO01/17337 discloses such a teat-cleaning device, which include a single teat-cleaning cup to be attached to a teat to be cleaned. The teat-cleaning cup is connected to a central arrangement for supplying a cleaning liquid into an inner space of the teat-cleaning cup and for discharging waste liquid from the inner space of the teat-cleaning cup by means of the application of a low, sub-atmospheric pressure. The teat-cleaning device disclosed in WO01/17337 is intended for being used together with an automatic handling device for the attachment of the teat-cleaning cups and the teatcups to the teats of the animal. During a cleaning operation the known teat-cleaning cup is moved successively from one teat to another for cleaning of the respective teats. In a milking stall with manual attachment of the teatcups, the cleaning operation is normally performed completely without the use of any particular cleaning equipment.

However, the manual cleaning operations according to the prior art are time-consuming and require a significant labour effort from the milker. The milker has to clean the teats successively. During cleaning of an individual teat, the milker has to take a very tiring position, which is unfavourable from an ergonomic point of view.

### SUMMARY OF THE INVENTION

The object of the present invention is to remedy the problems mentioned above and to provide a teat-cleaning device, which is operable in a convenient manner and in such a way that the efforts to be made by the milker are small.

This object is achieved by the device initially defined, which is characterised by the features defined in the characterising portion of claim 1.

By means of such a device the teat-cleaning member may easily be attached to all the teats of the animal and the cleaning operation may be performed simultaneously for all the teats. Consequently, the time required for the cleaning operation of an animal may be significantly reduced in comparison with the prior art where the teats of an animal are cleaned successively.

According to an embodiment of the invention, the central arrangement is arranged to discharge the waste liquid by applying a pressure significantly lower than the atmospheric pressure to the teat-cleaning cups via the conduit members. By means of such a sub-atmospheric pressure, which may be obtained by means of a vacuum pump, the waste liquid can be withdrawn in an efficient manner from the teat-cleaning cups. Moreover, thanks to the application of the sub-atmospheric pressure the teat-cleaning cups may also be retained on the teats during the cleaning operation so that the milker does not need to hold the teat-cleaning cups during the cleaning operation. A further advantage of the sub-atmospheric pressure is that the first quantity of milk, i.e. the so-called fore-milk may be extracted from the teat and transported away from the teat-cleaning cup.

According to a further embodiment of the invention, each conduit member includes a supply conduit for the supply of the cleaning liquid to said teat-cleaning cup, and a discharge conduit for the discharge of waste liquid from said teat-cleaning cup. Thus, mixing of any quantity of the supply liquid and the waste liquid can be avoided. Preferably, the central arrangement is then arranged to perform the supply of cleaning liquid and the discharge of waste liquid simultaneously. Thus a continuous flow of liquid through the inner space of the teat-cleaning cup is created. In order to permit such flow, an air inlet opening may be provided between the surroundings and the inner space of the teat-cleaning cups, or between the surroundings and any one of the conduit members in the proximity of the teat-cleaning cup.

According to a further embodiment of the invention, the supply conduit of each second conduit member may then be connected to the supply conduit of the first conduit member, wherein the discharge conduit of each second conduit member is connected to the discharge conduit of the first conduit member.

According to another embodiment of the invention, the conduit assembly includes a connection member arranged to hold the conduit members together. Such a connection member may be realised as a band or ring-shaped member extending around the bundle of conduit members.

According to a further embodiment of the invention, the teat-cleaning member includes a casing enclosing the connection member and having a first opening for the passage of the first conduit member and at least two second openings for the passage of a respective one of the second conduit members. By means of such a casing, the teat-cleaning member is easy and convenient to handle. Advantageously, each second conduit member may be relatively rigid permitting the second conduit member and the associated teat-cleaning cup to extend in an upward direction. Such rigidity facilitates the attachment of the teat-cleaning cups to the teats. This design is advantageous together with said casing.

According to a further embodiment of the invention, the teat-cleaning member includes a grip member, permitting holding of the teat-cleaning member. Advantageously, the grip member may be provided on the casing to be engaged by a wire-like member, for instance.

According to a further embodiment of the invention, the device includes a carrying arrangement for carrying the teat-cleaning member. Advantageously, the carrying arrangement may be adapted to permit the teat-cleaning member to be movable, in particular between at least an inactive position beside the animal to be cleaned and an active position beneath the teats of the animal. Moreover, the carrying arrangement may permit the teat-cleaning member to be transported between different milking positions in a milking stall, so that the teat-cleaning device according to the invention may serve several milking positions.

According to a further embodiment of the invention, the carrying arrangement is adapted to permit the teat-cleaning member to be attached to the animal and to follow the animal during a movement of the animal. Such a movement may include a movement, where the animal walks from a first animal position to a second animal position, e.g. at an entrance path outside a rotary parlour, or where the animal is moved on e.g. a rotary platform of a rotary parlour. In such a way the teat-cleaning member may follow an animal to be cleaned when the animal moves or is moved a certain distance during the cleaning operation.

According to a further embodiment of the invention, the carrying arrangement includes a support arm, which carries the teat-cleaning member and is movable in such way that said positions of the teat-cleaning member are reachable.

According to a further embodiment of the invention, the carrying arrangement includes at least one rail and a carriage movable along the rail, wherein the teat-cleaning member may be suspended in the carriage via a wire-like member. Such a rail and carriage permit the teat-cleaning member to be moved horizontally. The carrying arrangement may also include at least one holding member for holding the first conduit member along the wire-like member and the carriage. Thus the first conduit member may extend substantially vertically along the wire-like member, wherein the first conduit member is removed from the area where the milker is present. Advantageously, said holding member may form an open passage through which the first conduit member is movable, permitting the first conduit member to slide in the holding member along carriage and possibly also the wire-like member when the latter is raised or lowered.

According to a further embodiment of the invention, the device includes a balancing member enabling the teat-cleaning member to be raised and lowered by the application of a force smaller than the gravity force of the teat-cleaning member proper. Consequently, the milker may move the teat-cleaning member vertically in a convenient manner. Advantageously, the balancing member may be provided on the carriage. Furthermore, the balancing member may be arranged to collect the wire-like member, for instance the wire-like member may be wound on a reel or the like, which may be provided in the carriage.

According to a further embodiment of the invention each teat-cleaning cup includes a lower end, an upper end and an inner space, the upper end defining an opening for the introduction of the teat to be cleaned into the inner space. Moreover, each teat-cleaning cup may include a flexible lip extending around the opening and inwardly towards a centre of the opening in order to abut tightly the teat introduced into the inner space of the teat-cleaning cup. By means of such a lip, uncontrolled air leakage from the surroundings into the inner space can be prevented and thus a secure attachment of the teat-cleaning cup onto the respective teat is obtained. Advantageously, the lip slopes downwards towards the centre of the opening. Such an downwardly, inwardly inclined lip will prevent the teat-cleaning cup from falling off the teat, since the sub-atmospheric pressure in the inner space, thanks to this design of the lip, will tend to pull the teat into the inner space.

According to a further embodiment of the invention, the teat-cleaning device includes a retracting member arranged for retracting the teat-cleaning member from the teats of the animal after the cleaning operation is finished. By means of such a retracting member the teat-cleaning member does not need to be manually removal from the teats.

The object is also achieved by a milking stall including a device as specified above. Advantageously, the milking stall may include a number of milking boxes, each being adapted to receive one animal. The milking stall may be arranged according to various layouts, such as a herringbone milking parlour, a tandem milking parlour, a parallel milking parlour, a rotary milking parlour. Moreover, the milking stall may include a milking machine having a number of teatcups to be attached to the teats of the animal to be milked, and an apparatus for automatic attachment of the teatcups to the teats of the animal.

### BRIEF DESCRIPTION OF THE DRAWINGS

The present invention will now be described more closely by means of various embodiments thereof and with reference to the drawings attached hereto.
- Fig 1: discloses schematically a view of a teat-cleaning device according to an embodiment of the present invention.
- Fig 2: discloses a side-view of the device in Fig 1.
- Fig 3: discloses another side-view the device in Fig 1.
- Fig 4: discloses a view from above of the device in Fig 1.
- Fig 5: discloses schematically a connection member of the device in Fig 1.
- Fig 6: discloses a teat-cleaning cup of the device in Fig 1.
- Fig 7: discloses a view of the teat-cleaning device in Fig 1 in two different positions.
- Fig 8: discloses schematically a view from above of a herringbone milking parlour.
- Fig 9: discloses schematically a view from above of a tandem milking parlour.
- Fig 10: discloses schematically a view from above of a rotary milking parlour.
- Fig 11: discloses schematically a side view a device according to the invention with a carrying arrangement including a support arm.

### DETAILED DESCRIPTION OF VARIOUS EMBODIMENTS OF THE INVENTION

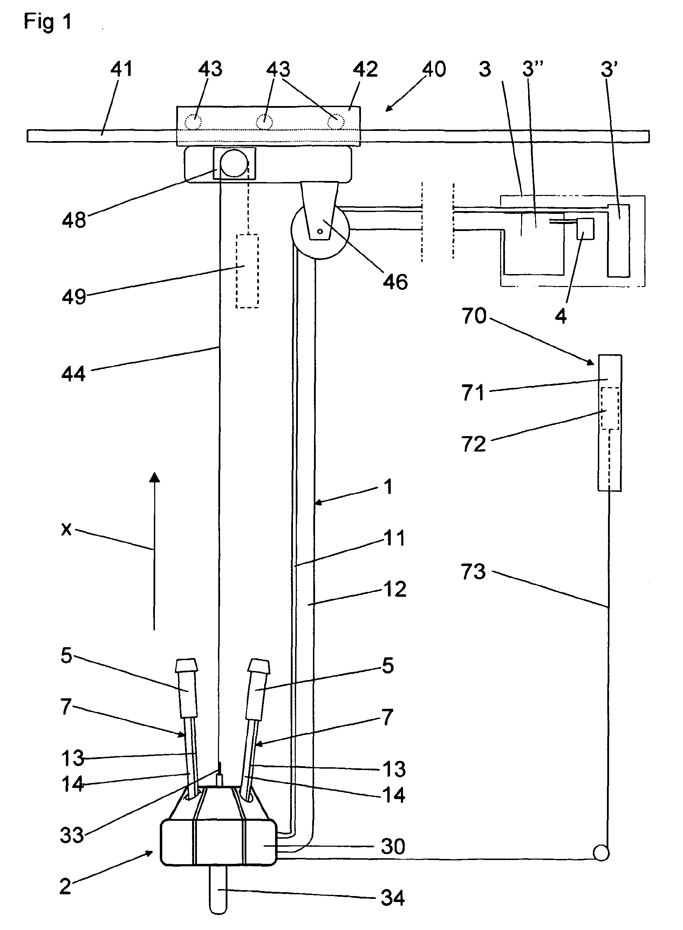

Fig 1 discloses a teat-cleaning device according to an embodiment of the present invention. The teat-cleaning device is intended to be arranged in a milking stall for cleaning the teats of the animals to be milked. It is to be noted that the same reference signs have been used in different embodiments throughout the description for elements having the same function.

The teat-cleaning device includes a first conduit member 1 and a teat-cleaning member 2. The teat-cleaning member 2 is, via the first conduit member 1, connected to a central arrangement 3, schematically disclosed in Fig 1, for supplying cleaning liquid to the teat-cleaning member 2 from a cleaning liquid tank 3' and for discharging waste liquid from the teat-cleaning member 2 to a waste tank 3" .

The teat-cleaning member 2 includes, in the embodiment described, four teat-cleaning cups 5, two of which are disclosed in Fig 1. The teat-cleaning cups 5 are attachable to a respective teat of the animal. It is to be noted that the teat-cleaning device according to the present invention is applicable to all animals that can be milked, such as cows, buffaloes, horses, sheep, goats, etc. Depending on the number of teats of the animal to be cleaned, the teat-cleaning device can include not only four teat-cleaning cups but any other number, e.g. two.

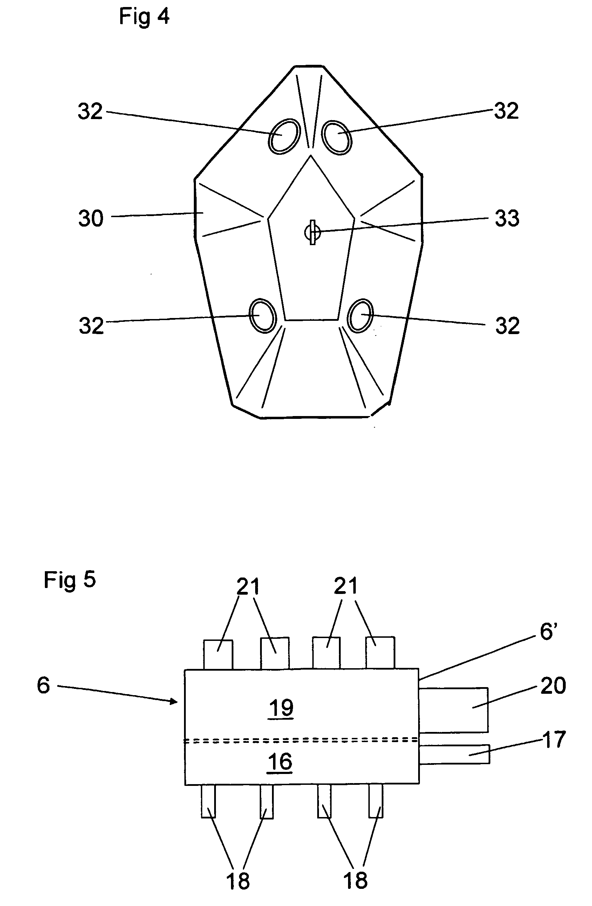

The teat-cleaning member 2 also includes a conduit assembly 6, for instance including a connection member 6', an example of which is schematically disclosed in Fig 5. Furthermore, the teat-cleaning device includes two second conduit members 7 extending between a respective one of the teat-cleaning cups 5 and the connection member 6'. Each teat-cleaning cup 5 is hence connected to the central arrangement 3 via the respective second conduit member 7 and the first conduit member 1 for the supply of said cleaning liquid and the discharge of said waste liquid. The cleaning liquid is the liquid, which is supplied for the cleaning of the teat, whereas the waste liquid is the liquid, which after the cleaning is discharged from the teat-cleaning cup 2. The central arrangement 3 is arranged to discharge the waste liquid by the application of a pressure significantly lower than the atmospheric pressure, i.e. a sub-atmospheric pressure, to the teat-cleaning cups 5 via the first conduit member 1 and the second conduit members 7. To this end, the central arrangement 3 may include or be connected to a vacuum source, for instance a vacuum pump, schematically indicated at 4, sucking the waste liquid from the teat-cleaning cups 5.

The first conduit member 1 includes a first supply conduit 11 for said supply of cleaning liquid, and a first discharge conduit 12 for the discharge of waste liquid. Each second conduit member 7 includes a second supply conduit 13 for said supply of cleaning liquid, and a second discharge conduit 14 for the discharge of waste liquid. Consequently, the central arrangement 3 can perform the supply of cleaning liquid to the teat-cleaning cups 5 and the discharge of waste liquid from the teat-cleaning cups 5 simultaneously. In the embodiment disclosed, the second supply conduit 13 of each second conduit member 7 is connected to the first supply conduit 11 of the first conduit member 1, and the second discharge conduit 14 of each second conduit member 7 is connected to the first discharge conduit 12 of the first conduit member 1. It is to be noted that the second conduit member 7 also may include two second supply conduits 13 for each teat-cleaning cup 5, for the supply of cleaning liquid, or cleaning liquid and air or any other suitable gas. The two supply conduits 13 may be arranged to supply cleaning liquid and air in alternating manner.

To this end the connection member 6' disclosed in Fig 5 includes two parts, a supply part for the connection of the supply conduits 11, 13 and a discharge part for the connection of the discharge conduits 12, 14. The supply part includes an inner space 16, an inlet nozzle 17 communicating with the inner space 16 and four outlet nozzles 18 communicating with the inlet space 16. The inlet nozzle 17 is connectable to the first supply conduit 11. The outlet nozzles 18 are connectable to a respective second supply conduit 13. The discharge part includes an inner space 19, an outlet nozzle 20 communicating with the inner space 19 and four inlet nozzles 21 communicating with the inlet space 19. The outlet nozzle 20 is connectable to the first discharge conduit 12. The inlet nozzles 21 are connectable to a respective second discharge conduit 14.

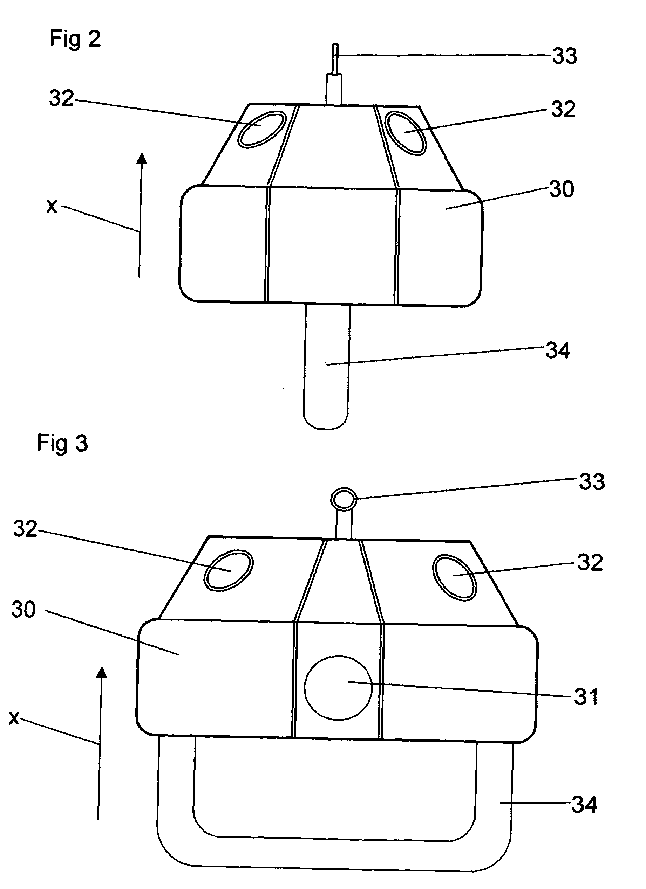

The teat-cleaning member 2 also includes a casing 30, which is disclosed in Figs 2-4 and which encloses the connection member 6'. The casing 30 has a first opening 31 for the passage of the first conduit member 1 and four second openings 32 for the passage of a respective one of the four second conduit members 7. It is to be noted that the positions of the inlet and outlet nozzles 17, 18, 20, 21 of the connection member 6' disclosed in Fig 5 have not been adapted to the shape of the casing 30 and the positions of the openings 31, 32. Each second conduit member 7 is relatively rigid. Such rigidity may be obtained by producing at least one of the second supply conduit 13 and the second discharge conduit 14 in a relatively rigid material. Such rigidity permit the second conduit members 7 and the associated teat-cleaning cup 5 to extend upwardly in a substantially vertical, upward direction x or a slightly inclined upward direction from the connection member 6' or from the casing 30.

Moreover, the teat-cleaning member 2 includes a grip member 33 permitting gripping and holding of the teat-cleaning member 2. In the embodiment disclosed, the grip member 33 is provided on top of the casing 30 and has the shape of a ring. The teat-cleaning member 2 also includes a handle 34, which in the embodiment disclosed is attached to the casing 30 on the lower side thereof, and which permits manual gripping of the teat-cleaning member 2.

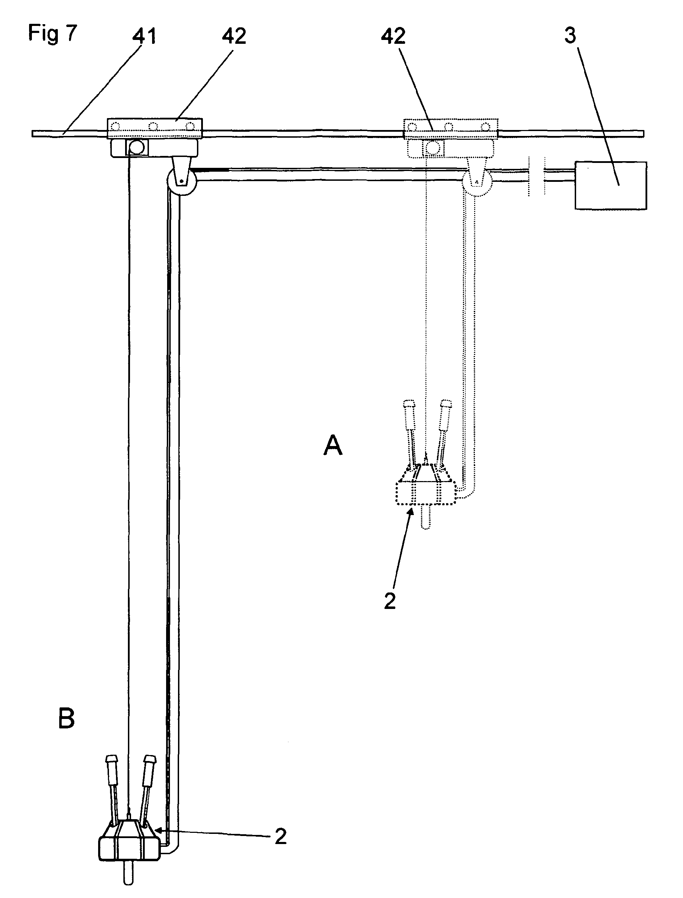

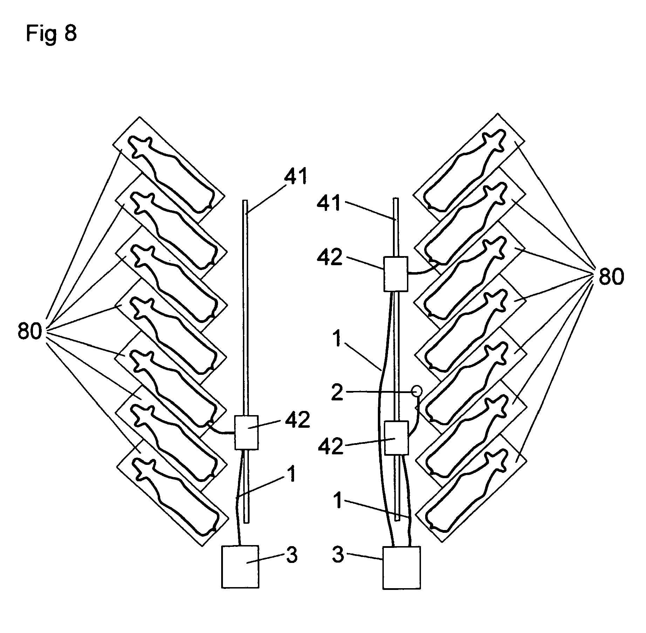

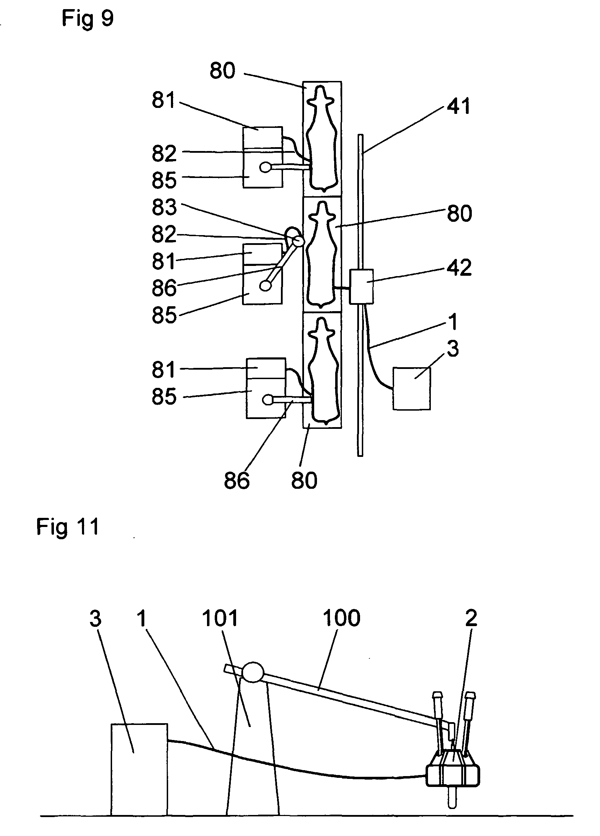

The teat-cleaning device includes a carrying arrangement 40 for carrying the teat-cleaning member 2. In particular, the carrying arrangement 40 is adapted to carry the teat-cleaning member 2 in such manner that the teat-cleaning member 2 is movable horizontally and vertically at least between an inactive position beside A the animal to be cleaned and an active position B beneath the teats of the animal, see Fig 7. The mobility of the teat-cleaning member 2 may serve several purposes. The carrying arrangement 40 may also be adapted to ensure that the teat-cleaning member 2 can be moved to an active position beneath the animal to be cleaned and an inactive position beside the animal. Furthermore, the carrying arrangement 40 may be adapted to permit the teat-cleaning member 2 to follow an animal, which moves along an animal route from a first animal position to a second animal position, or is moved from a first animal position to a second animal position. The carrying arrangement 40 thus may permit the teat-cleaning member 2 to be moved or transported between different milking positions in the milking stall. Each different milking position may be arranged to house a respective animal to be milked according to any suitable milking stall layout, see Figs 8 and 9. It is to be noted that the teat-cleaning position and the milking position may be the same or geographically separated from each other.

The carrying arrangement may be designed in various manners depending on, for instance, the layout of the milking stall where the teat-cleaning device is to be installed. The carrying arrangement 40, disclosed in Figs 1 - 9, includes at least one rail 41 and a carriage 42, which is movable along the rail 41 by means of rotating wheels 43. The teat-cleaning member 2 is suspended in the carriage 42 via a wire-like member 44, e.g. in the form of a line, a rope, a wire or a chain, which is attached to the grip member 33. The carrying arrangement 40 includes at least one holding member 46 for holding the first conduit member 1 along the wire-like member 44 and the carriage 42. The holding member 46 forms an open passage through which the first conduit member 1 is movable. In the embodiment disclosed, only one holding member 46 in the form of a pulley arranged on the carriage 42 is provided, although the carrying arrangement 40 may include several carrying members of various kind and arranged along the extension of the first conduit member 1 from the teat-cleaning member 2 to the central arrangement 3. It is also to be noted that the carrying arrangement 40 may include more than only one rail for the transport of the carriage 42 and the teat-cleaning member 2 depending on the layout of the milking stall in which the teat-cleaning device is provided.

Furthermore, the teat-cleaning device includes a balancing member 48, which enables raising and lowering of the teat-cleaning member 2 by the application of a manual force that is significantly smaller than the gravity force of the teat-cleaning member 2 proper. The balancing member 48 is provided on the carriage 42. The balancing member 48 is only schematically disclosed in Fig 1 and exemplified as a reel-like member arranged to collect the wire-like member 44.

Such a reel-like member may for instance be biased by means of a spring (not disclosed) balancing the gravity force of the teat-cleaning member 2. The balancing member 48 may also be in the form of a pulley, wherein the wire-like member 44 extends around the pulley and is attached to a weight balancing the gravity force of the teat-cleaning member 2. The weight is indicated at 49 by dotted lines in Fig 1.

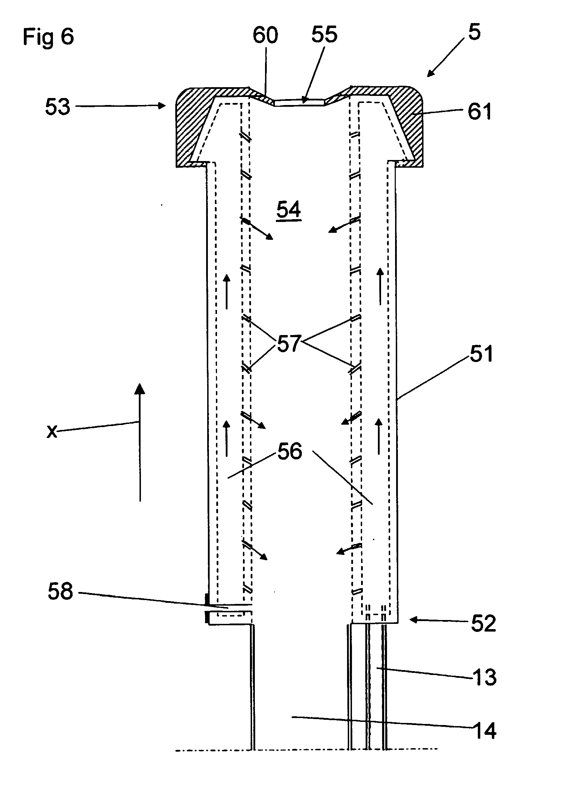

Fig 6 discloses more closely an example of a teat-cleaning cup 5 of the teat-cleaning device according to the invention. Each teat-cleaning cup 5 includes a shell 51, a lower end 52, an upper end 53 and an inner space 54 for receiving a teat to be cleaned. The upper end 52 defines an opening 55 for the introduction of the teat into the inner space 54. At the outer periphery of the inner space 54 but inside the shell 51, two supply channels 56 are arranged for ejecting the supply liquid into the inner space via a plurality of small nozzles 57. The supply channels 56 are both connected to the second supply conduit 13. The inner space 54 is connected to the second discharge conduit 14 for the discharge of the waste liquid. A small air inlet 58 is provided at the lower end 52, for instance, for improving the suction effect of the vacuum pump, and thus the flow of the supply liquid and waste liquid through the teat-cleaning cup 5.

Each teat-cleaning cup 5 includes a flexible lip 60 extending around the opening 55 and inwardly towards a centre of the opening 55 in order to abut tightly the teat introduced into the inner space 54. The lip 60 also slopes downwards towards the centre of the opening 55 and towards the inner space 54. The lip 60 forms in the embodiment disclosed a part of a cover member 61, which is removably arranged on top of the teat-cleaning cup 5. The cover 61 and thus the lip 60 are manufactured in flexible, preferably rubber-like material.

The teat-cleaning device also includes a retracting member 70, see Fig 1, arranged for retracting the teat-cleaning member 2 from the teats of the animal after the cleaning operation is finished. The retracting member 70 includes a cylinder 71 with a piston driven by the supply of a pressurised medium or by the application of a sub-atmospheric pressure. The piston 72 is connected to a wire-like member 73, e.g. in the form of a line, a rope, a wire or a chain, which is connected to the teat-cleaning member 2. By moving the piston rearwards the teat-cleaning cups 5 can then be withdrawn from the teats in a convenient manner. It is to be noted that the retracting function of the retracting member could also be incorporated in the balancing member 48.

In a simplified embodiment of the invention, the first conduit member 1 may include a bundle of supply conduits and discharge conduits. In this case, each such supply conduit is connected to or forms a single conduit together with a respective second supply conduit 13 of the second conduit member 7. Moreover, each such discharge conduit is connected to or forms a single conduit together with a respective second discharge conduit 14 of the second conduit member 7. In this case, the conduit assembly 6 may also include a connection member, which is arranged to hold the bundle of conduits together. Such a connection member may also possibly include the grip member 33 and the handle 34. In this case the connection member may be shaped as a band, a ring or any similar member extending around the bundle of conduits.

Figs 8 - 10 disclose three different milking stall layouts having a teat-cleaning device. Fig 8 discloses a milking stall including a so-called herringbone milking parlour having two rows of animal boxes 80 for housing a respective animal to be milked. It is to be noted, that the milking machines for performing the milking of the animals have been excised in Fig 8 only to make the figure less complicated. In the milking stall two teat-cleaning devices of the kind disclosed in Figs 1 - 5 are provided, one for each row of animal boxes 80. As appears from Fig 8 the rail 41 of each teat-cleaning device extend along a respective one of the rows of animal boxes 80. The carriage 42 is movable along the rail to permit the teat-cleaning member to be moved between the different animal boxes 80 and thus between the animals to be cleaned. Consequently, the teats of each animals in the animal boxes 80 may be cleaned and massaged successively by means of the movable teat-cleaning member 2 before the teatcups of the milking machine are attached to the teats of the animals. Furthermore, as appears from the teat-cleaning device shown to the right in Fig 8 more than one carriage 42, and in this case two carriages 42, may be mounted on the rail 41 to be movable along the row of animal boxes 80. Such a configuration is advantageous when a large number of animal boxes 80 are arranged along one row.

Fig 9 discloses a milking stall including a so-called tandem milking parlour having one row of animal boxes 80 arranged after each other in a row. Each animal box 80 is also in this case adapted to house one animal to be milked. As appears from Fig 9 a milking machine 81 is associated with each milking box 80. Each milking machine 81 is schematically disclosed having a milk conduit 82 and a milking member 83 with four teatcups (not specifically disclosed) to be attached to the teats of the animal to be milked. Moreover, an apparatus 85 having a robot arm 86 is associated with each milking box 80 for automatic attachment of the milking member 83 and the teatcups to the teats of the animal. A teat-cleaning device of the kind disclosed in Figs 1 - 5 is provided, wherein the rail 41 extends along the row of animal boxes 80. The carriage 42 is thus movable along the rail 41 to permit the teat-cleaning member 2 to be moved between the different animal boxes 80 and thus between the animals to be cleaned. Consequently, the teats of each animal in the animal boxes 80 may be cleaned and massaged successively by means of the movable teat-cleaning member 2 before the teatcups of the milking machine 81 are attached to the teats of the animals. It is to be noted that also the teat-cleaning member 2 may be attached to the teats of the animal by means of an apparatus for automatic attachment, for instance the apparatuses 85. In this case the rail 41 and the carriage 42 are preferably arranged on the same side of the row of animal boxes 80 as the apparatuses 85.

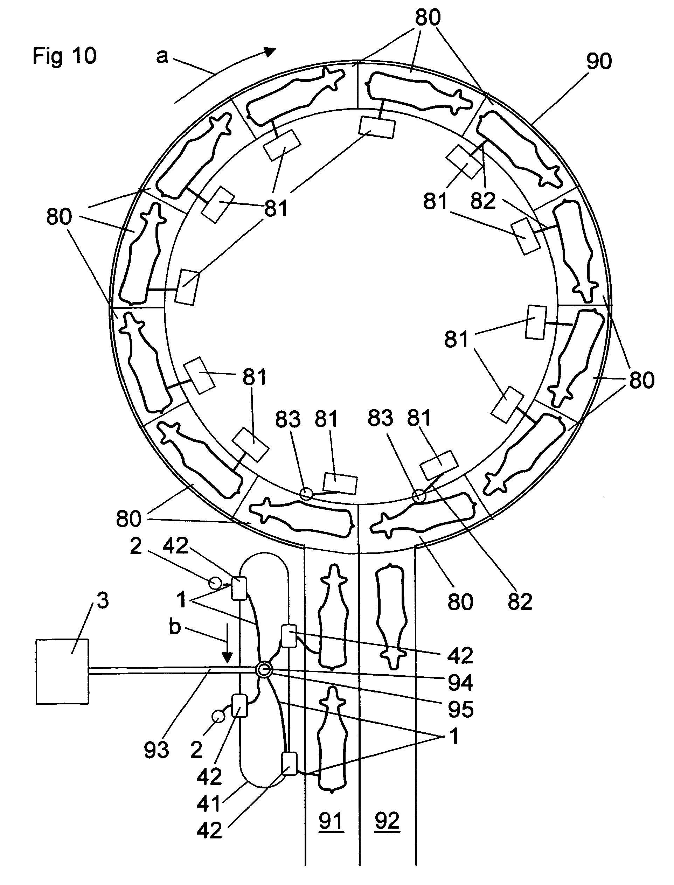

Fig 10 discloses a milking stall including a rotary milking parlour having a plurality of animal boxes 80 for housing a respective animal to be milked. The milking parlour includes a rotary platform 90, which is rotatable in a rotary direction a and on which the animal boxes 80 are arranged along the periphery of the circular platform 90. A milking machine 81, having a milk conduit 82 and a milking member 83, is associated with each animal box 80. The milking machines 81 are provided on the rotary platform 90. The milking stall disclosed in Fig 10 also includes a stationary entry path 91 and a stationary exit path 92 arranged for permitting the animals to enter and exit, respectively, the rotary platform 90.

The rotary parlour disclosed in Fig 10 is a so called tandem rotary parlour where the animals are positioned in a tangential direction nose-to-tail after each other along the periphery of the rotary platform 90. However, the teat-cleaning device may also be used together with a rotary parlour of any other kind, such as a herringbone rotary parlour, a rotoradial rotary parlour, an abreast rotary parlour, etc.

The teat-cleaning device disclosed in Fig 10 differs from the one disclosed in Figs 1 - 9 in that the rail 41 is designed to form a closed path. In the embodiment disclosed in Fig 10, four carriages 42, each carrying a teat-cleaning member 2, are provided on the rail 41. The carriages 42 are thus permitted to move around the closed path formed by the rail 41. The four teat-cleaning members 2 are connected to a common central arrangement 3 via a respective first conduit member 1 and a common distribution conduit 93, which includes a vertical conduit portion 94. The first conduits 1 are connected to the common distribution conduit 93 by means of a respective swivel connection 95 (one of which is indicated in Fig 10) arranged to be rotatable around the vertical conduit portion 93.

Consequently, the carriages 42 carrying the teat-cleaning members 2 may travel along the closed path along the direction b. One of the teat-cleaning members 2 may thus be attached to the teats of an animal approaching the rotary parlour, in the example disclosed at a distance of approximately two cow lengths from the rotary platform 90. The teat-cleaning member 2 is thus permitted to follow the movement of the animal during its walk towards the platform 90 from a first animal position to a second animal position thanks to the carriage 42 being movable along the rail 41. In connection with the animal entering the rotary platform 90, the teat-cleaning member 2 is removed from the teats of the animal, for instance by the movement of the rotary platform 90 or by a retracting member, such as the retracting member 70 disclosed in Fig 1. The milking member 83 may then be attached to the teats of the animal and remain during the stay of the animal on the rotary platform 90 as known per se.

In an alternative embodiment, the teat-cleaning device and the rail 41 may be arranged in parallel with the rotary platform 90 instead of the entry path 91. In such a design, the teat-cleaning member will be attached to the teats of the animal when the animal has entered the rotary platform 90 and follow the animal during an initial part of the stay on the rotary platform 90.

Fig 11 discloses a still further embodiment of the teat-cleaning device. This embodiment differs from the previous embodiments in that the carrying arrangement includes a support arm 100. The support arm 100 carries the teat-cleaning member 2. The support arm 100 is movably mounted to a base member 101 in such a way that the teat-cleaning member 2 is movable between an inactive position and an active position, and movable to follow a movement of the animal to which the teat-cleaning member 2 is attached.

The present invention is not limited to the embodiments disclosed but may be varied and modified within the scope of the following claims.

## Claims

1. A device for cleaning the teats of an animal, including at least one first conduit member (1) and at least one teat-cleaning member (2), which via the first conduit member (1) is connectable to a central arrangement (3) for supplying cleaning liquid and discharging waste liquid, wherein the teat-cleaning member (2) includes at least two teat-cleaning cups (5) to be applied to a respective teat of the animal,
**characterised in**
**that** the teat-cleaning member (2) includes a conduit assembly (6) and two second conduit members (7) extending between a respective one of the teat-cleaning cups (5) and the conduit assembly (6),
**that** each teat-cleaning cup (5) is connected to the central arrangement (3) via the respective second conduit member (7) and the first conduit member (1) for said supply of cleaning liquid and said discharge of waste liquid, and
**that** the conduit assembly includes a connection member (6'), which connects each second conduit member (7) to the first conduit member (1).

2. A device according to claim 1, **characterised in that** the central arrangement (3) is arranged to discharge the waste liquid by applying a pressure significantly lower than the atmospheric pressure to the teat-cleaning cups (5) via the conduit members (1, 7).

3. A device according to any one of claims 1 and 2, **characterised in that** each conduit member (1, 7) includes a supply conduit (11, 13) for the supply of the cleaning liquid to said teat-cleaning cup (5), and a discharge conduit (12, 14) for the discharge of waste liquid from said teat-cleaning cup (5).

4. A device according to claims 2 and 3. **characterised in that** the central arrangement (3) is arranged to perform the supply of cleaning liquid and the discharge of waste liquid simultaneously.

5. A device according to any one of claims 3 and 4, **characterised in that** the supply conduit (13) of each second conduit member (7) is connected to the supply conduit (11) of the first conduit member (1), and that the discharge conduit (14) of each second conduit member (7) is connected to the discharge conduit (12) of the first conduit member (1).

6. A device according to any one of the preceding claims, **characterised in that** the conduit assembly includes a connection member arranged to hold the conduit members (1, 7) together.

7. A device according to any one of the preceding claims, **characterised in that** the teat-cleaning member (2) includes a casing (30) enclosing the connection member (6') and having a first opening (31) for the passage of the first conduit member (1) and at least two second openings (32) for the passage of a respective one of the second conduit members (7).

8. A device according to any one of the preceding claims, **characterised in that** each second conduit member (7) is relatively rigid permitting the second conduit member (7) and the associated teat-cleaning cup (5) to extend in an upward direction (x).

9. A device according to any one of the preceding claims, **characterised in that** the teat-cleaning member (2) includes a grip member (33) permitting holding of the teat-cleaning member.

10. A device according to claims 7 and 9, **characterised in that** the grip member (33) is provided on the casing (30).

11. A device according to any one of the preceding claims, **characterised in that** the device includes a carrying arrangement (40) for carrying the teat-cleaning member (2).

12. A device according to claim 11, **characterised in that** the carrying arrangement is adapted to permit the teat cleaning member (2) to be movable.

13. A device according to claim 12, **characterised in that** the teat cleaning member (2) is movable between at least an inactive position (A) beside the animal to be cleaned and an active position (B) beneath the teats of the animal.

14. A device according to any one of claims 11 to 13, **characterised in that** the carrying arrangement is adapted to permit the teat-cleaning member (2) to be attached to the animal and to follow the animal during a movement of the animal.

15. A device according to any one of claims 13 and 14, **characterised in that** the carrying arrangement includes a support arm, which carries the teat-cleaning member and is movable in such way that said positions of the teat-cleaning member are reachable.

16. A device according to any one of claims 11 to 14, **characterised in that** the carrying arrangement (40) includes at least one rail (41) and a carriage (42) movable along the rail (41), wherein the teat-cleaning (2) member is suspended in the carriage (42) via a wire-like member (44).

17. A device according to claim 16, **characterised in that** the carrying arrangement (40) includes at least one holding member (46) for holding the first conduit member (1) along the wire-like member (44) and the carriage (42).

18. A device according to claim 17, **characterised in that** said holding member (46) forms an open passage through which the first conduit member (1) is movable.

19. A device according to any one of claims 16 to 18, **characterised in that** the device includes a balancing member (48) enabling the teat-cleaning member (2) to be raised and lowered by the application of a force smaller than the gravity force of the teat-cleaning member (2) proper.

20. A device according to claim 19, **characterised in that** the balancing member (48) is provided on the carriage (42).

21. A device according to any one of claims 19 and 20, **characterised in that** the balancing member (48) is arranged to collect the wire-like member (44).

22. A device according any one of the preceding claims, **characterised in that** each teat-cleaning cup (2) includes a lower end (52), an upper end (53) and an inner space (54), the upper end defining an opening (55) for the introduction of the teat to be cleaned into the inner space.

23. A device according to claim 22, **characterised in that** each teat-cleaning cup (5) includes a flexible lip (60) extending around the opening (55) and inwardly towards a centre of the opening in order to abut tightly the teat introduced into the inner space (54) of the teat-cleaning cup (5).

24. A device according to claim 23, **characterised in that** the lip (60) slopes downwards towards the centre of the opening (55).

25. A device according to any one of the preceding claims, **characterised in that** the teat-cleaning device includes a retracting member (70) arranged for retracting the teat-cleaning member (2) from the teats of the animal after the cleaning operation is finished.

26. A milking stall including a device according to any one of the preceding claims.

27. A milking stall according to claim 26, **characterised in that** the milking stall includes a number of milking boxes, each being adapted to receive one animal.

28. A milking stall according to claim 27, **characterised in that** the milking boxes are arranged as a one of a herringbone milking parlour, a tandem milking parlour, a parallel milking parlour and a rotary milking parlour.

29. A milking stall according to any one of claims 26 to 28, **characterised in that** the milking stall includes a milking machine having a number of teatcups to be attached to the teats of the animal to be milked, and an apparatus for automatic attachment of the teatcups to the teats of the animal.

## Patentansprüche

1. Vorrichtung zum Reinigen der Zitzen eines Tieres, umfassend mindestens ein erstes Leitungselement (1) und mindestens ein Zitzenreinigungselement (2), das über das erste Leitungselement (1) mit einer zentralen Anordnung (3) zur Zufuhr von Reinigungsflüssigkeit und zur Ausgabe von verbrauchter Flüssigkeit verbunden werden kann, wobei das Zitzenreinigungselement (2) mindestens zwei Zitzenreinigungsbecher (5) umfasst, die jeweils an einer Zitze eines Tieres angesetzt werden,
**dadurch gekennzeichnet,**
**dass** das Zitzenreinigungselement (2) eine Leitungsanordnung (6) umfasst sowie zwei zweite Leitungselemente (7), die sich zwischen jeweils einem der Zitzenreinigungsbecher (5) und der Leitungsanordnung (6) erstrecken,
**dass** jeder Zitzenreinigungsbecher (5) über das jeweilige zweite Leitungselement (7) und das erste Leitungselement (1) zur Zufuhr der Reinigungsflüssigkeit und zur Ausgabe der verbrauchten Flüssigkeit mit der zentralen Anordnung (3) verbunden ist, und
**dass** die Leitungsanordnung ein Verbindungselement (6') umfasst, das jedes zweite Leitungselement (7) mit dem ersten Leitungselement (1) verbindet.

2. Vorrichtung nach Anspruch 1, **dadurch gekennzeichnet, dass** die zentrale Anordnung (3) zur Ausgabe der verbrauchten Flüssigkeit dient, indem ein Druck, der wesentlich niedriger ist als der Umgebungsdruck, über die Leitungselemente (1, 7) an die Zitzenreinigungsbecher (5) angelegt wird.

3. Verfahren nach einem der Ansprüche 1 und 2, **dadurch gekennzeichnet, dass** jedes Leitungselement (1,7) eine Zufuhrleitung (11, 13) für die Zufuhr der Reinigungsflüssigkeit an den Zitzenreinigungsbecher (5) umfasst sowie eine Ausgabeleitung (12, 14) für die Ausgabe von verbrauchter Flüssigkeit aus dem Zitzenreinigungsbecher (5).

4. Vorrichtung nach Anspruch 2 und 3, **dadurch gekennzeichnet, dass** die zentrale Anordnung (3) so ausgestaltet ist, dass sie die Zufuhr der Reinigungsflüssigkeit und die Ausgabe von verbrauchter Flüssigkeit gleichzeitig ausführt.

5. Vorrichtung nach einem der Ansprüche 3 und 4, **dadurch gekennzeichnet, dass** die Zufuhrleitung (13) jedes zweiten Leitungselements (7) mit der Zufuhrleitung (11) des ersten Leitungselementes (1) verbunden ist und dass die Ausgabeleitung (14) jedes zweiten Leitungselementes (7) mit der Ausgabeleitung (12) des ersten Leitungselementes (1) verbunden ist.

6. Vorrichtung nach einem der vorangegangenen Ansprüche, **dadurch gekennzeichnet, dass** die Leitungsanordnung ein Verbindungselement umfasst, das zum Zusammenhalten der Leitungselemente (1, 7) dient.

7. Vorrichtung nach einem der vorangegangenen Ansprüche, **dadurch gekennzeichnet, dass** das Zitzenreinigungselement (2) ein Gehäuse (30) umfasst, das das Verbindungselement (6') umschließt und eine erste Öffnung (31) für den Zugang des ersten Leitungselementes (1) aufweist sowie mindestens zwei zweite Öffnungen (32) zum Durchgang des jeweiligen zweiten Leitungselementes (7).

8. Vorrichtung nach einem der vorangegangenen Ansprüche, **dadurch gekennzeichnet, dass** jedes zweite Leitungselement (7) relativ starr ist, wodurch ermöglicht wird, dass sich das zweite Leitungselement (7) und der zugeordnete Zitzenreinigungsbecher (5) in einer Aufwärtsrichtung (x) erstrecken.

9. Vorrichtung nach einem der vorangegangenen Ansprüche, **dadurch gekennzeichnet, dass** das Zitzenreinigungselement (2) ein Greifelement (33) umfasst, das das Halten des Zitzenreinigungselementes ermöglicht.

10. Vorrichtung nach Anspruch 7 und 9, **dadurch gekennzeichnet, dass** das Greifelement (33) am Gehäuse (30) vorgesehen ist.

11. Vorrichtung nach einem der vorangegangenen Ansprüche, **dadurch gekennzeichnet, dass** die Vorrichtung eine Trageanordnung (40) zum Tragen des Zitzenreinigungselementes (2) umfasst.

12. Vorrichtung nach Anspruch 11, **dadurch gekennzeichnet, dass** die Trageanordnung eine Bewegung des Zitzenreinigungselementes (2) erlaubt.

13. Vorrichtung nach Anspruch 12, **dadurch gekennzeichnet, dass** das Zitzenreinigungselement (2) zwischen mindestens einer inaktiven Position (A) neben dem zu reinigenden Tier und einer aktiven Position (B) unterhalb der Zitzen des Tieres beweglich ist.

14. Vorrichtung nach einem der Ansprüche 11 bis 13, **dadurch gekennzeichnet, dass** die Trageanordnung es erlaubt, dass das Zitzenreinigungselement (2) an das Tier angesetzt werden und dem Tier während der Bewegung des Tieres folgen kann.

15. Vorrichtung nach einem der Ansprüche 13 und 14, **dadurch gekennzeichnet, dass** die Trageanordnung einen Haltearm umfasst, der das Zitzenreinigungselement trägt und auf eine solche Weise beweglich ist, dass die Positionen des Zitzenreinigungselementes erreichbar sind.

16. Vorrichtung nach einem der Ansprüche 11 bis 14, **dadurch gekennzeichnet, dass** die Trageanordnung (40) mindestens eine Schiene (41) und einen Laufwagen (42) umfasst, der entlang der Schien (41) beweglich ist, wobei das Zitzenreinigurtgselement (2) im Laufwagen (42) über ein drahtartiges Element (44) aufgehängt ist.

17. Vorrichtung nach Anspruch 16, **dadurch gekennzeichnet, dass** die Trageanordnung (40) mindestens ein Halteelement (46) zum Halten des ersten Leitungselementes (1) entlang des drahtartigen Elementes (44) und des Laufwagens (42) umfasst.

18. Vorrichtung nach Anspruch 17, **dadurch gekennzeichnet, dass** das Halteelement (46) einen offenen Durchgang bildet, durch den das erste Leitungselement (1) bewegt werden kann.

19. Vorrichtung nach einem der Ansprüche 16 bis 18, **dadurch gekennzeichnet, dass** die Vorrichtung ein Ausgleichselement (48) umfasst, das es ermöglicht, dass das Zitzenreinigungselement (2) durch die Anwendung einer Kraft angehoben und abgesenkt werden kann, die kleiner ist als die Gravitationskraft des eigentlichen Zitzenreinigungselementes (2).

20. Vorrichtung nach Anspruch 19, **dadurch gekennzeichnet, dass** das Ausgleichselement (48) am Laufwagen (42) vorgesehen ist.

21. Vorrichtung nach einem der Ansprüche 19 und 20, **dadurch gekennzeichnet, dass** das Ausgleichselement (48) dazu dient, das drahtartige Element (44) aufzufangen.

22. Vorrichtung nach einem der vorangegangenen Ansprüche, **dadurch gekennzeichnet, dass** jeder Zitzenreinigungsbecher (2) ein unteres Ende (52) sowie ein oberes Ende (53) und einen Innenraum (54) umfasst, wobei das obere Ende eine Öffnung (55) zum Einführen der zu reinigenden Zitze in den Innenraum definiert.

23. Vorrichtung nach Anspruch 22, **dadurch gekennzeichnet, dass** jeder Zitzenreinigungsbecher (5) eine flexible Lippe (60) umfasst, die sich um Öffnung (55) herum und einwärts zu einem Zentrum der Öffnung erstreckt, so dass sie dicht an der in den Innenraum (54) des Zitzenreinigungsbechers (5) eingeführten Zitze aufliegt.

24. Vorrichtung nach Anspruch 23, **dadurch gekennzeichnet, dass** die Lippe (60) abwärts zum Zentrum der Öffnung (55) geneigt ist.

25. Vorrichtung nach einem der vorangegangenen Ansprüche, **dadurch gekennzeichnet, dass** die Zitzenreinigungsvorrichtung ein Rückziehelement (70) umfasst, das zum Zurückziehen des Zitzenreinigungselementes (2) von den Zitzen des Tieres dient, nachdem der Reinigungsbetrieb beendet ist.

26. Melkstand, umfassend eine Vorrichtung nach einem der vorangegangenen Ansprüche.

27. Melkstand nach Anspruch 26, **dadurch gekennzeichnet, dass** der Melkstand eine Anzahl von Melkboxen umfasst, von denen jede ein Tier aufnimmt.

28. Melkstand nach Anspruch 27, **dadurch gekennzeichnet, dass** die Melkboxen in einem Fischgrätenmelkstand, einem Tandemmelkstand, einem Parallelmelkstand oder einem Karussellmelkstand angeordnet sind.

29. Melkstand nach einem der Ansprüche 26 bis 28, **dadurch gekennzeichnet, dass** der Melkstand eine Melkmaschine mit einer Anzahl von Zitzenbechern aufweist, die an die Zitzen des zu melkenden Tieres angesetzt werden, sowie eine Vorrichtung zum automatischen Ansetzen der Zitzenbecher an die Zitzen des Tieres.

## Revendications

1. Dispositif destiné à nettoyer les trayons d'un animal, comprenant au moins un premier élément de canalisation (1) et au moins un élément de nettoyage de trayons (2), lequel, par l'intermédiaire du premier élément de canalisation (1), peut être relié à une installation centrale (3) destinée à alimenter un liquide de nettoyage et à évacuer un liquide de rejet, où l'élément de nettoyage de trayons (2) comprend au moins deux godets de nettoyage de trayons (5) devant être appliqués à un trayon respectif de l'animal, **caractérisé**
**en ce que** l'élément de nettoyage de trayons (2) comprend un ensemble de canalisation (6) et deux deuxièmes éléments de canalisation (7) s'étendant entre un godet respectif parmi les godets de nettoyage de trayons (5) et l'ensemble de canalisation (6),
**en ce que** chaque godet de nettoyage de trayon (5) est relié à l'installation centrale (3) par l'intermédiaire du deuxième élément de canalisation (7) et du premier élément de canalisation (1) respectifs pour ladite alimentation d'un liquide de nettoyage et ladite évacuation d'un liquide de rejet, et
**en ce que** l'ensemble de canalisation comprend un élément de raccordement (6') qui raccorde chaque deuxième élément de canalisation (7) au premier élément de canalisation (1).

2. Dispositif selon la revendication 1, **caractérisé en ce que** l'installation centrale (3) est agencée pour évacuer le liquide de rejet en appliquant une pression significativement inférieure à la pression atmosphérique aux godets de nettoyage de trayons (5) par l'intermédiaire des éléments de canalisation (1, 7).

3. Dispositif selon l'une quelconque des revendications 1 et 2, **caractérisé en ce que** chaque élément de canalisation (1, 7) comprend une canalisation d'alimentation (11, 13) destinée à l'alimentation du liquide de nettoyage vers ledit godet de nettoyage de trayon (5) et une canalisation d'évacuation (12, 14) destinée à l'évacuation d'un liquide de rejet depuis ledit godet de nettoyage de trayon (5).

4. Dispositif selon les revendications 2 et 3,
**caractérisé en ce que** l'installation centrale (3) est agencée afin de réaliser l'alimentation du liquide de nettoyage et l'évacuation du liquide de rejet simultanément.

5. Dispositif selon l'une quelconque des revendications 3 et 4, **caractérisé en ce que** la canalisation d'alimentation (13) de chaque deuxième élément de canalisation (7) est reliée à la canalisation d'alimentation (11) du premier élément de canalisation (1) et **en ce que** la canalisation d'évacuation (14) de chaque deuxième élément de canalisation (7) est reliée à la canalisation d'évacuation (12) du premier élément de canalisation (1).

6. Dispositif selon l'une quelconque des revendications précédentes, **caractérisé en ce que** l'ensemble de canalisation comprend un élément de raccordement agencé pour maintenir les éléments de canalisation (1, 7) ensemble.

7. Dispositif selon l'une quelconque des revendications précédentes, **caractérisé en ce que** l'élément de nettoyage de trayons (2) comprend un coffre (30) enfermant l'élément de raccordement (6') et ayant une première ouverture (31) destinée au passage du premier élément de canalisation (1) et au moins deux deuxièmes ouvertures (32) destinées au passage d'un élément respectif parmi les deuxièmes éléments de canalisation (7).

8. Dispositif selon l'une quelconque des revendications précédentes, **caractérisé en ce que** chaque deuxième élément de canalisation (7) est relativement rigide, en permettant au deuxième élément de canalisation (7) et au godet de nettoyage de trayon associé (5) de s'étendre dans une direction vers le haut (x).

9. Dispositif selon l'une quelconque des revendications précédentes, **caractérisé en ce que** l'élément de nettoyage de trayons (2) comprend un élément de préhension (33) permettant de maintenir l'élément de nettoyage de trayons.

10. Dispositif selon les revendications 7 et 9,
**caractérisé en ce que** l'élément de préhension (33) est prévu sur le coffre (30).

11. Dispositif selon l'une quelconque des revendications précédentes, **caractérisé en ce que** le dispositif comprend une installation de transport (40) destinée à transporter l'élément de nettoyage de trayons (2).

12. Dispositif selon la revendication 11, **caractérisé en ce que** l'installation de transport est conçue pour permettre à l'élément de nettoyage de trayons (2) d'être mobile.

13. Dispositif selon la revendication 12, **caractérisé en ce que** l'élément de nettoyage de trayons (2) est mobile entre au moins une position inactive (A) à côté de l'animal devant être nettoyé et une position active (B) en dessous des trayons de l'animal.

14. Dispositif selon l'une quelconque des revendications 11 à 13, **caractérisé en ce que** l'installation de transport est conçue pour permettre à l'élément de nettoyage de trayons (2) d'être attaché à l'animal et de suivre l'animal pendant un mouvement de l'animal.

15. Dispositif selon l'une quelconque des revendications 13 à 14, **caractérisé en ce que** l'installation de transport comprend un bras de support, qui transporte l'élément de nettoyage de trayons et qui est mobile de telle manière que lesdites positions de l'élément de nettoyage de trayons peuvent être atteintes.

16. Dispositif selon l'une quelconque des revendications 11 à 14, **caractérisé en ce que** l'installation de transport (40) comprend au moins un rail (41) et un chariot (42) mobile le long du rail (41), où l'élément de nettoyage de trayons (2) est suspendu au chariot (42) par l'intermédiaire d'un élément semblable à un câble (44).

17. Dispositif selon la revendication 16, **caractérisé en ce que** l'installation de transport (40) comprend au moins un élément de maintien (46) destiné à maintenir le premier élément de canalisation (1) le long de l'élément semblable à un câble (44) et du chariot (42).

18. Dispositif selon la revendication 17, **caractérisé en ce que** ledit élément de maintien (46) forme un passage ouvert au travers duquel le premier élément de canalisation (1) est mobile.

19. Dispositif selon l'une quelconque des revendications 16 à 18, **caractérisé en ce que** le dispositif comprend un élément d'équilibrage (48) permettant à l'élément de nettoyage de trayons (2) d'être relevé et abaissé par l'application d'une force inférieure à la pesanteur de l'élément de nettoyage de trayons (2) lui-même.

20. Dispositif selon la revendication 19, **caractérisé en ce que** l'élément d'équilibrage (48) est prévu sur le chariot (42).

21. Dispositif selon l'une quelconque des revendications 19 et 20, **caractérisé en ce que** l'élément d'équilibrage (48) est agencé pour recueillir l'élément semblable à un câble (44).

22. Dispositif selon l'une quelconque des revendications précédentes, **caractérisé en ce que** chaque godet de nettoyage de trayon (2) comprend une extrémité inférieure (52), une extrémité supérieure (53) et un espace intérieur (54), l'extrémité supérieure définissant une ouverture (55) destinée à l'introduction du trayon devant être nettoyé dans l'espace intérieur.

23. Dispositif selon la revendication 22, **caractérisé en ce que** chaque godet de nettoyage de trayon (5) comprend une lèvre souple (60) s'étendant autour de l'ouverture (55) et dirigée vers l'intérieur en direction d'un centre de l'ouverture afin d'appuyer fermement sur le trayon introduit dans l'espace intérieur (54) du godet de nettoyage de trayon (5).

24. Dispositif selon la revendication 23, **caractérisé en ce que** la lèvre (60) est inclinée vers le bas en direction du centre de l'ouverture (55).

25. Dispositif selon l'une quelconque des revendications précédentes, **caractérisé en ce que** le dispositif de nettoyage de trayons comprend un élément de retrait (70) conçu pour faire revenir l'élément de nettoyage de trayons (2) en arrière depuis les trayons de l'animal après que l'opération de nettoyage est terminée.

26. Stalle de traite comprenant un dispositif conforme à l'une quelconque des revendications précédentes.

27. Stalle de traite selon la revendication 26, **caractérisée en ce que** la stalle de traite comprend un certain nombre de boxes de traite, chacun étant conçu pour recevoir un animal.

28. Stalle de traite selon la revendication 27, **caractérisée en ce que** les boxes de traite sont agencés selon l'une d'une salle de traite en épi, une salle de traite en tandem, une salle de traite en parallèle et une salle de traite rotative.

29. Stalle de traite selon l'une quelconque des revendications 26 à 28, **caractérisée en ce que** la stalle de traite comprend une machine de traite ayant un certain nombre de godets pour trayons à fixer aux trayons de l'animal à traire, et un dispositif destiné à fixer automatiquement les godets à trayons aux trayons de l'animal.
